# EUROPEAN PATENT SPECIFICATION

(11) **EP 1 133 430 B1**
(45) Date of publication and mention of the grant of the patent: **02.10.2002**
(21) Application number: 99954303.6
(22) Date of filing: 22.11.1999
(51) Int. Cl.: B62D 55/084

(54) **UNDERCARRIAGE WITH VARIABLE TRACK GAUGE**
UNTERBODEN MITSPURWEITENÄNDERUNG
TRAIN DE ROULEMENT A GABARIT D'ECARTEMENT VARIABLE

(30) Priority: 26.11.1998 IT BO980660
(43) Date of publication of application: 19.09.2001
(73) Proprietor: Sampierana S.P.A., 47026 San Piero in Bagno (IT)
(72) Inventor: PARA, Moreno, I-47026 San Piero in Bagno (IT); MOSCONI, Angelo, I-47026 San Piero in Bagno (IT); BRIGHI, Raffaele, I-47023 Cesena (IT); SARAGONI, Roberto, I-47021 Valgianna di Bagno di Romagna (IT)
(74) Representative: Lanzoni, Luciano
(86) International application number: IB9901868
(87) International publication number: WO00030919

(56) References cited:
- US-A- 3 712 398

## Description

### Technical Field

The present invention relates to an undercarriage with variable track gauge.

In particular, the present invention relates to a tracked undercarriage defining the support and driving base of operating machines, such as rock drills, trolleys, cranes, excavators, earth moving machines and other machines.

### Background Art

Undercarriages with variable track gauge are currently known which comprise a main frame able to support the upper part of the operating machine, and a first and a second sub-frame or spars each positioned in correspondence with a respective lateral flank of the main frame and which bear respective drive tracks of the undercarriage.

In known undercarriages, to associate the track/bearing sub-frames to the main frame it is provided for the main frame to present in correspondence with each of said lateral flanks a first and a second seats for the sliding housing of corresponding first and second beam elements extending from the respective track-bearing sub-frame.

Said track-bearing sub-frames are moved between a first position with reduced track gauge - particularly suited for transporting the machine that mounts the undercarriage - wherein said first and second sub-frames are approached to the respective flank and the respective beam elements are recessed into the respective seats, and a second position with widened track gauge - particularly suited for the operative phases of the machine - wherein at least one of said first and second sub-frame is moved away from the respective flank and the respective beam element extends to the exterior of the respective seat.

In known undercarriages, means are provided for blocking the sliding of the respective beam element in the corresponding reduced or widened position. According to a known type of undercarriage these blocking means are defined by pins able to be inserted within an appropriate hole provided in the seat and in corresponding holes drilled in the profile of the beams and such as to allow blocking the corresponding beam element in the reduced track gauge or extended track gauge position.

To perform such locking operations, the direct manual intervention of personnel is required, in addition to the employment of auxiliary equipment for the extraction and support of the undercarriage during the setting-up phases.

This practice is difficult and inconvenient to perform by personnel and entails a considerable expenditure of labour. Moreover, dedicated and auxiliary equipment must be provided for its accomplishment, which equipment presents a certain economic cost and entails the need to provide for related storage and transportation spaces.

An additional problem noted in known undercarriages with variable track gauge of the aforementioned type relates to the fact that in order to allow an easy assembly, disassembly and extraction and insertion movement of the beam elements with respect to their respective seats, the dimensions of the beam must present a certain play with respect to the seat wherein they are inserted. This, however, gives rise to a problem with vibration and with the unstable condition of the machine mounting such an undercarriage during the operative working phase.

This problem is felt in a particularly acute manner, obviously, in the case of rock drills, where the considerable height constitutes an amplifying factor of the play in correspondence with the tracked support base and the pitching movement deriving therefrom causes considerable problems to the operative condition and durability of the machine. Such a pitch problem is in any case significant in all machines, for instance in cranes, excavators, crushers etc.

Prior document US-A-3 712 398 which comprises the features mentioned in the preamble of claim 1 discloses track-laying vehicle having a hydraulically operable device for changing the track width, in which specific and complex safety device are provided for maintaining the spars or beam elements supporting the caterpillar chains in the condition of widened track gauge. Such safety devices comprises a box shaped support which has also internally a bearing to which is journaled an axle supporting an eccentric for engaging and securing the corresponding spar or beam element in the position of widened track gauge. For the purpose of securing the widened track gauge position of the undercarriage a lever is inserted into the bore of the eccentric and the latter is manually turned until it passes through the recess of the lower chord and engages the clamping portion of spars or beam element and is clamped in view of the eccentricity of eccentric.

### Disclosure of Invention

The present invention relates to an undercarriage in accordance with the characteristics of Claim 1.

According to a first aspect, in particular an undercarriage with variable track gauge is provided comprising a main frame defining a first and a second mutually opposite flanks, and a first and a second sub-frame each for the support of respective means for driving the undercarriage positioned each in correspondence with a respective one of said first and second flank of the main frame, wherein said main frame presents in correspondence with each of said first and second flanks at least a respective seat, for the sliding housing of a corresponding beam element extending from the respective sub-frame, and wherein means are provided for moving said first and second sub-frame between at least a first position with reduced track gauge, wherein said first and second sub-frame are approached to the respective flank and the respective beam elements are recessed in the respective seats, and a second position with widened track gauge, wherein at least one of said first and second sub-frame is moved away from the respective flank and the second beam element extends to the exterior of the respective seat.

Advantageously, it is provided for the undercarriage to comprise means for blocking the sliding of the respective beam elements within the corresponding seat comprising a first inclined surface positioned within the respective seat and a second inclined surface positioned in correspondence with the outer profile of the respective beam element and co-operating with said first inclined surface to fasten the beam element within the respective seat.

Such a configuration of the locking means allows to obtain the locking of the sliding of the beam elements within the respective seats without the need to employ manpower to lock said beam elements in position. Hence, a considerable reduction in setting-up times is obtained.

Furthermore, such a configuration, thanks to the fact that the beam elements are fastened within the respective seats, allows to eliminate the play present between beam elements and corresponding seats, overcoming the problems of vibration and instability encountered with prior art undercarriages.

The secondary claims refer to particular and advantageous embodiments.

Further technical features and advantages of the present invention shall become more readily apparent from the detailed description that follows, made with reference to the accompanying drawings, which represent an embodiment provided purely by way of non limiting example.

### Description of the Drawings

- Figure 1 shows a top view with sectioned parts of a preferred embodiment of undercarriage according to the present invention;
- Figure 2 shows a section view of the preferred embodiment of undercarriage in closed or reduced track gauge condition;
- Figure 3 shows a section view of the preferred embodiment of undercarriage in widened track gauge condition;
- Figure 4 shows a section view, taken according to the line IV-IV of Figure 3, of an extraction beam with front view of the related housing seat;
- Figure 5 shows a longitudinal section view of a detail of the means for arresting the extraction of the present preferred embodiment of undercarriage;
- Figure 6 shows a bottom view of a detail relating to the area of said means for arresting the extraction of the present preferred embodiment of undercarriage;
- Figures 7 and 8 show a lateral and a top view of the wedge element of the present preferred embodiment of undercarriage;
- Figure 9 shows a section view of a detail of the present preferred embodiment of undercarriage shown in a condition of insertion of said wedge element.

### Description of the Illustrative Embodiment

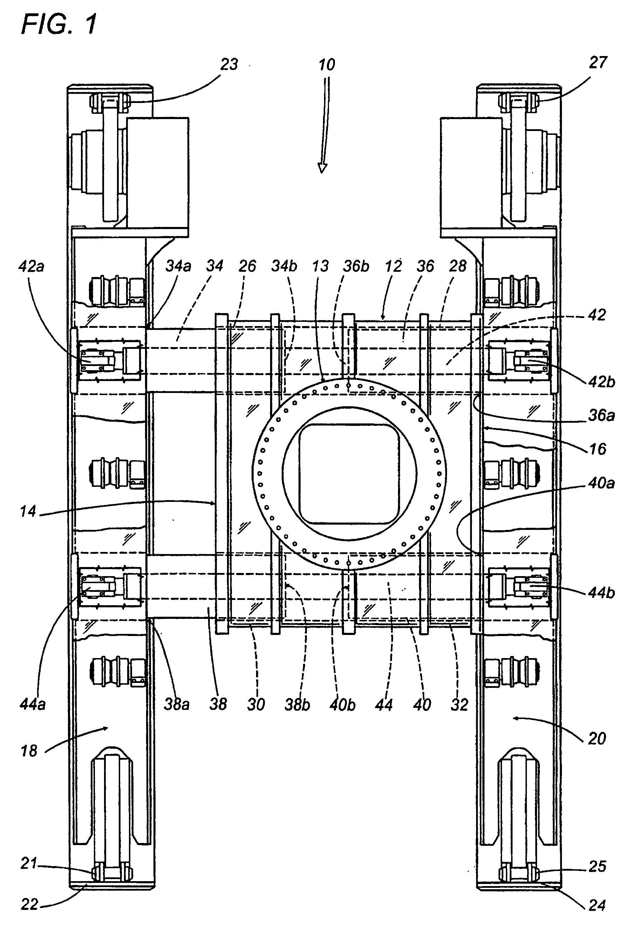

With reference to Figure 1 it can be observed that a preferred embodiment 10 of undercarriage with variable tank gauge essentially comprises a main frame 12 which centrally mounts a fifth wheel 13 for connecting to the upper part of the machine using the present undercarriage, which main frame 12 defines a first and a second flanks 14, 16, opposing each other, and is associated, in correspondence with a respective one of said first and second opposite flanks 14, 16 of the main frame 12, to a first and a second sub-frame 18, 20 each for the support of respective drive means, in the form of respective tracks enclosed in a loop 22, 24 on appropriate rollers 21, 23, 25, 27 provided on the sub-frames 18, 20 of the undercarriage.

As Figure 1 shows, the aforementioned main frame 12 presents in correspondence with each of said first and second flanks 14, 16 of the respective first and second seat 26, 28, 30, 32 (shown in dashed line in Figure 1) for the sliding housing of respective first and second beam elements 34, 36, 38, 40 extending from the respective track-bearing sub-frame 18,20. Said first and second seat 26, 28, 30, 32 and said first and second beam element 34, 36, 38, 40 being longitudinally distanced from each other.

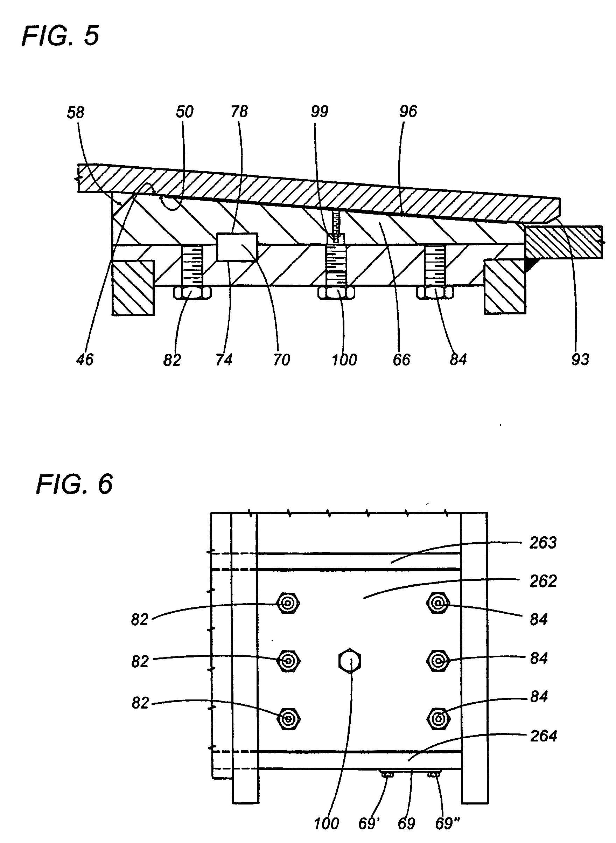

In particular, as can also be observed from the following Figure 4, which refers to a detail of the undercarriage wherein said seat 26 is situated, each seat presents in particular a quadrangular section comprising an upper wall 261, a lower wall 262 and opposite lateral walls 263, 264 respectively distanced from each other, whilst each beam element 34 presents in turn a quadrangular box profile in turn defined by an upper wall 341, a lower wall 341 and opposite lateral walls 343, 344 respectively distanced from each other. The overall size of said beam element is such as to allow it to be inserted and mounted within the corresponding sliding housing seat 26.

As Figure 1 shows, each beam element 34, 36, 38, 40 is connected at an extremity 34a, 36a, 38a, 40a to the respective sub-frame 18,20, wherefrom it extends in overhang, and terminates on the opposite side with a free extremity 34b, 36b, 38b, 40b for its insertion into the respective seat 26, 28, 30, 32.

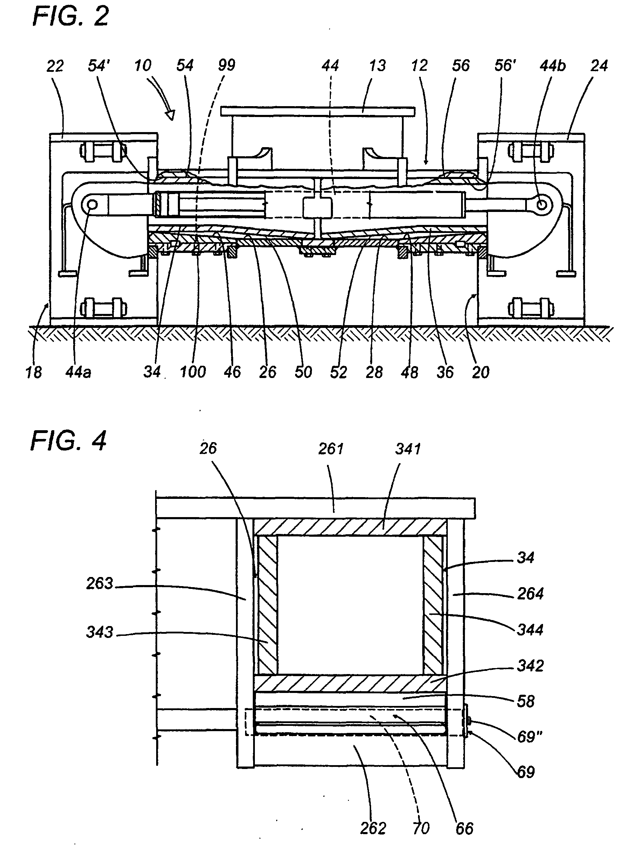

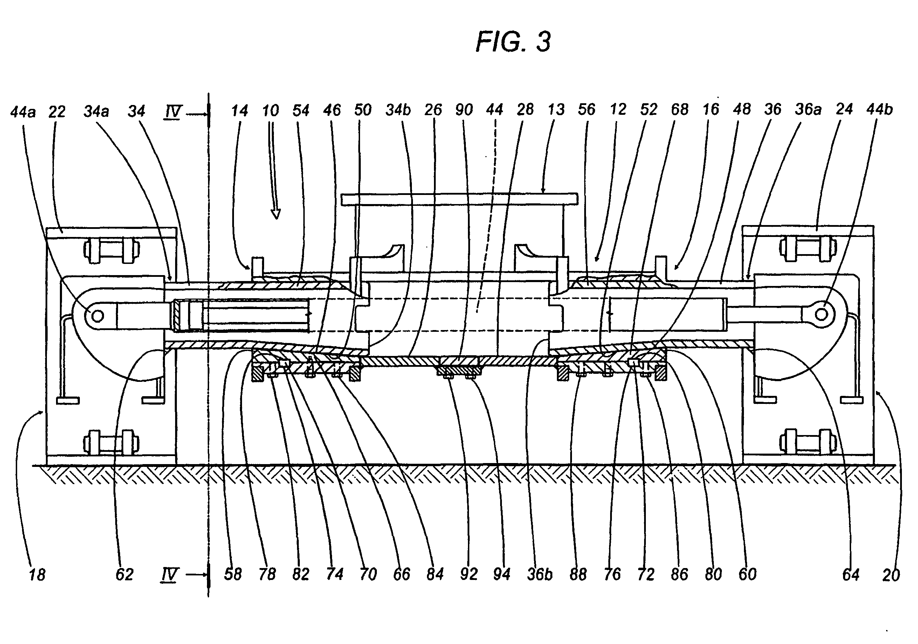

Means able to be activated to command the movement of said sub-frames 18, 20 with respect to the central frame 12 are provided. Such means are, in particular, provided for moving said first and second sub-frame 18, 20 between a first position with reduced track gauge (shown in Figure 2), wherein said first and second sub-frame 18, 20 are approached to the respective flank 14, 16 and the respective beam elements 34, 36 are recessed in the respective seats 26, 28 and a second position with widened track gauge (shown in Figure 3), wherein at least one of said first and second sub-frame 18, 20 is moved away from the respective flank 14, 16 and the respective beam element 34, 36 extends to the exterior of the respective seat 26, 28. One could also imagine applying the present embodiment to an undercarriage having working positions of said sub-frames which are intermediate to said extreme positions.

As the aforementioned Figure 1 schematically shows, said means for widening and narrowing said sub-frames are in the form of respective first and second hydraulic cylinders 42,44, housed in an axially movable manner within the seats and the beam elements, which present respective extremities 42a, 42b, 44a, 44b for connecting to respective organs (not explicitly shown in the Figures) for engaging and fastening the opposite sub-frames 18, 20.

With reference to the following Figure 2, it can be observed that present embodiment of undercarriage advantageously comprises suitable means able to block the extraction of the respective beam element 34, 36 from the corresponding seat 26, 28, which means for blocking the extraction comprise a first inclined surface 46, 48 positioned inside the respective seat 26, 28 and a second inclined surface 50, 52 positioned in correspondence with the outer profile of the respective beam element 34, 36 and co-operating with said first inclined surface 46, 48 to fasten, when the respective beam element 34, 36 extends (as shown in Figure 3 outwards) the beam element 34, 36 itself within the respective seat 26, 28, i.e. towards and against a corresponding engagement surface (indicated as 54 and 56 in Figures 2 and 3) on the opposite wall of the corresponding seat 26, 28, thereby obtaining the elimination of the vertical play of the extracting beams 34, 36 with respect to the respective seats 26, 28.

The provision of a second inclined surface for blocking the sliding motion, as well as for the elimination of play of the beam element within the respective seat, on the outer profile of the respective beam element, allows to leave the central recess of said beam element free from any encumbrance, allowing to extend, as shown, the extremity for the attachment of the respective hydraulic cylinders towards the corresponding sub-frame, considerably easing the operations for fastening said extremities to the sub-frames.

As said Figures 2 and 3 show, in a preferred but not exclusive manner, said second surface inclined on the outer surface 50, 52 is defined by a progressive widening, downward, of the cross section of the respective beam element 34, 36.

As the aforementioned Figures 2 and 3 also show, said first inclined surface 46, 48 is provided on the lower side or wall of the respective seat 26, 28, whilst said second inclined surface 50, 52 is provided on the lower side or wall of the respective beam element 34, 36.

Moreover, the first inclined surface 46, 48 of each seat is positioned in the vicinity of the outer edge of the respective seat 26, 28, whilst said second inclined surface 50, 52 on the beam element is provided in the vicinity of the free extremity of the respective beam element 34, 36, which allows to obtain a maximum extension of the beam elements outside the respective seat.

Moreover, the above arrangement also yields the advantage that in this manner, in the extended or widened condition of Figure 3, the vertical thrust of said beam element 34, 36 occurs upwards against the front area 54, 56 of the upper wall of the respective seat 26, 28.

The first inclined surface 46,48 presents an angular position with respect to the horizon which can range between 1 ° and 20°. This angle, thanks to the fact that it provides a modest reaction in the horizontal direction, allows to maintain said beam elements in the condition of widened track gauge with a modest level of pressure within said hydraulic means 46, with considerable advantage from the point of view of the lesser wear of the hydraulic actuation system. It has been further verified, at least theoretically, that such angle interval should also allow not to stress the system excessively and to obtain in any case a contact pressure sufficient to guarantee a contact suitable for overcoming play between the beam element and the corresponding seat.

In a preferred manner, as the figures show, said first inclined surface 46, 48 presents an angular position with respect to horizontal equal to 4° to 6°, which also facilitates the execution of mounting operation, better described below.

The present means for blocking the extraction could be used for blocking the re-entry of the extracting beams, however, for this purpose, for the sake of constructive simplicity, according to a further advantageous aspect, suitable means are provided, able to block the return of the respective beam element 34, 36 into the corresponding seat 26, 28.

As Figure 3 clearly shows, said means for blocking the re-entry are in the form of a first inclined face 58, 60 positioned within the seat 26, 28 and of a second inclined face 62, 64 integral with the respective beam element 34, 36 and co-operating with said first face 58, 60 in the seat 26, 28 to fasten, when the respective beam element 34, 36 is recessed into the seat 26, 28 (as shown in Figure 2), the beam element 34, 36 itself within the respective seat 26, 28, i.e. towards and against a corresponding engagement area or surface 54', 56', and to obtain the recovery of the vertical play of the extracting beams in the respective seats in correspondence with the openings for insertion into the seats, when said undercarriage is with reduced track gauge.

As shown in Figure 3, said first inclined face 58, 60 in the respective seat 26, 28 is provided on the lower side of the seat 26, 28 and said second inclined seat 62, 64 integral with the respective beam element 34, 36 is provided on the lower side of the same beam element 34,36 in such a way as to act (as shown in Figure 2) to thrust said beam element 34, 36 upwards.

A preferred inclination for said inclined faces 58, 60 for arresting the beam elements in closure action of the sub-frames on the main frame ranges between 35° and 80°, preferably equal to 40° to 60°. This considerable inclination allows on one hand to recover the play in closure condition of the sub-frames with a short stroke and a reduced size and at the same time allows to unlock rapidly and with modest force the corresponding beam elements when, in opposite motion, an opening action is effected, i.e. said beam elements are extracted towards the exterior of the respective seats.

The first inclined face 58, 60 in the seat 26, 28 is situated in the vicinity of the inlet opening of the seat 26, 28 for housing the beam element 34, 36, whilst said second inclined face 62, 64 integral with the respective beam element 34, 36 is situated in correspondence with the extremity 34a, 36a of said beam element 34, 36 which extends from the respective sub-frame 18, 20.

According to a further advantageous aspect of the present preferred embodiment, as shown in said Figures 2, 3 and in the following Figures 4 and 5, the respective fist inclined surface 46, 48 for locking the extraction of the respective beam element 34, 36 is obtained on a respective wedge element 66, 68 which is fastened in a removable manner through suitable means within the respective seat 26, 28.

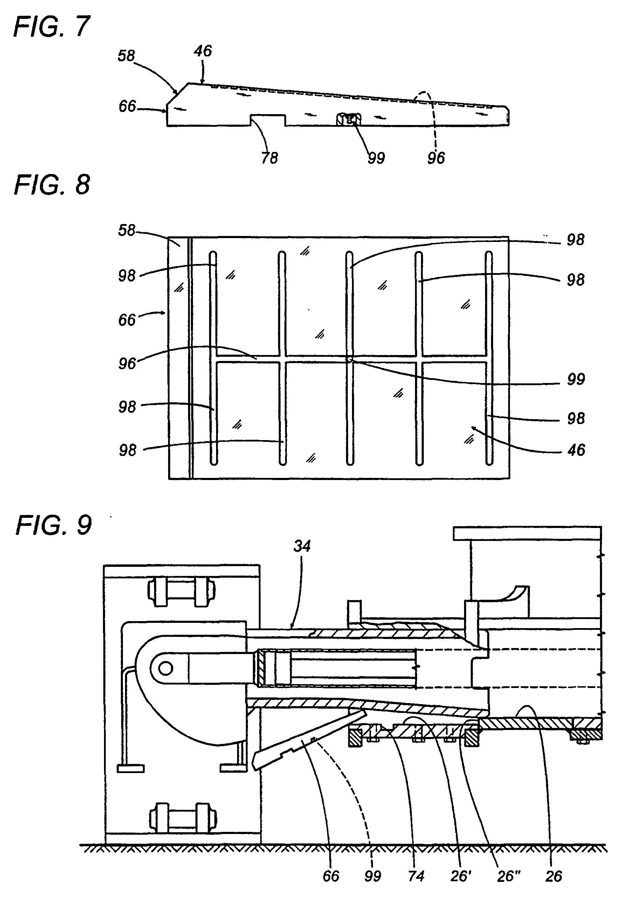

As can be observed from Figures 4 and 8 in combination, said first inclined surface 46,48 extends over the entire width of the respective seat 26, 28 and said second inclined surface 50, 52 extends over the entire width of the respective beam element 34, 36. This configuration guarantees a sure contact between said surfaces and, thanks to the ample contact surface, a decidedly reduced level of specific stresses or pressures between the surfaces in contact.

Said means for fastening in a removable manner the wedge element 66, 68 comprise, as shown in Figures 3, 4, 5, 7 and 8, an elongated bolt 70, 72 which is inserted in a first recess 74, 76 in correspondence with a surface of said seat 26, 28 and in a second recess 78, 80 provided in said wedge element 66, 68 in correspondence with the surface for engagement with said surface for the first recess 74, 76 in said seat 26,28. As Figures 4 and 6 show, the bolt 70 is maintained inserted by means of an appropriate platelet 69 fastened in a removable manner by means of screws 69' and 69".

With reference to Figure 2, it can also be observed that the present wedge element defines with its upper vertex a sliding position for the lower face of the respective beam element, which is, in these outward extension and return movements, also supported in a sliding manner by the lower wall of the corresponding seat which sustains the free extremity of the beam element.

As shown in said figures, advantageously, also the first inclined face 58, 60 positioned within the seat 26, 28 to block the re-entry of the respective beam element 34, 36 is situated on said wedge element 66, 68 and is longitudinally aligned to said first surface 46, 48 for blocking the outward extension of the beam element 34, 36 presenting an inclination that it opposite thereto.

As can be inferred from Figures 4 and 8 in combination, also said first inclined face 58, 60 in the seat 26, 28 extends over the entire width of the respective seat 26, 28, as said second inclined face 62,64 integral with the beam element 34, 36 extends over the entire width of the respective beam element 34, 36.

According to a further advantageous aspect, means are provided for adjusting the vertical position of said first inclined surface 46,48. Means are also provided for adjusting the inclination of said first inclined surface 46, 48.

Said means for adjusting the height position of said first inclined surface 46, 48 comprise, as is evident also with reference to Figures 3 and 6, a first and a second series of adjusting grub screws 82, 84 and 86, 88 longitudinally distanced from each other, which are inserted in corresponding holes provided in the forward lowered part of the lower wall 262 of the corresponding seat 26 and are movable bi-directionally to be engaged against the lower side of said wedge element 66, 68 which is opposite the upper one for the engagement with the respective beam element 34, 36. The use of at least one adjustment grub screw would, at the limit, be sufficient.

Said means for adjusting the height position of the wedge also provide means for adjusting the vertical position of said first inclined face 62, 64 for blocking the re-entry of said extracting beams into the respective seat 26, 28.

If said first and second series of grub screws 82, 84 and 86, 88 are actuated bi-directionally in different manners from each other, an adjustment is obtained of the inclination of said first inclined surface 46, 48. One could also imagine, at the limit, using at least one adjustment grub screw eccentrically engaging against the side of said wedge element 66, 68 which is opposite the one engaging with the respective beam element 34, 36.

The corresponding seats 26, 28, 30, 32 provided on opposite flanks 14, 16 of said main frame 12, as well shown in dashed line in Figure 1, realised mutually aligned and in mutual communication being defined by a respective transversely elongated housing cavity, it is possible to provide means able simultaneously to adjust, in the position wherein the extracting beams are recessed within the respective seat, the vertical position of the free extremities 34b, 36b of the beam elements 34, 36 within the opposite seats 26, 28 of the main frame 12.

Said means for the simultaneous adjustment of the vertical position of the free extremities 34b, 36b of said beam elements 34, 36 in the recessed position within the opposite seats 26, 28 of the main frame 12 comprise a central plate 90 for supporting said free extremities 34b, 36b of said beam elements and means for moving bilaterally in the vertical said plate 90 in the form of at least one adjustment grub screw 92, 94 engaging against the face of said plate element 90 which is opposite to the one supporting the free extremities 34b, 36b of said beam elements 34, 36.

Said central plate 90 within the cavity defining opposite seats 26, 28 of the main frame is positioned in such a way as to thrust the free ends 34b, 36b to engage against an opposite surface in the seat 26, 28. To allow the free extremity of the corresponding beam element easily to climb in the re-entry phase on said central plate 90, each beam element is provided, as shown in Figure 5, with a transverse chamfer, indicated with the numeric reference 93.

It is possible to infer, from the above description, that the adjustment of said grub screws for the adjustment of the extreme wedges and of the central plate 90 can and is in fact performed by the manufacturer upon setting up the undercarriage, without the user having to act in any way to provide for said widened and reduced positions of the undercarriage, as is the case in the prior art, except for appropriately commanding the related hydraulic cylinders for widening and narrowing the track gauge.

According to an additional advantageous aspect (see especially Figures 5, 7, 8) means are provided for lubricating said first and second inclined surfaces 46, 48, 50, 52 for locking the extraction of the respective beam element from the corresponding seat 26, 28. Said means for lubricating said first and second inclined surfaces 46, 48, 50, 52 comprise a plurality of greasing channels 96, 98 on said first inclined surface 46, 48. The greasing channels comprise at least a primary longitudinal channel 96 transversely whereto extend a plurality of secondary channels 98. An appropriate greaser 99 closed by a protecting cap 100 is used to provide the lubricant in central position to said longitudinal conduit 96.

The present system for locking the sliding of the extracting beams of the undercarriage is set up in a rapid and easy manner as can be illustrated with the aid of the following Figure 9. To position the wedge that bears the locking surface in the corresponding housing 26' defined by the lowered front portion of the seat 26, the rear extremity of the wedge is set on the edge of the seat 26 and the re-entry is actuated of the corresponding extracting beam 34 which drives said wedge inside until it comes in contrast with the shoulder 26". At this point it is sufficient to insert the corresponding bolt, appropriately locking it in position. The reduced thickness of the wedge allows for the easy execution of said operations.

With the present embodiment, therefore, a wedge element has been provided that is able to function at the same time as an arrest or limit stop organ for the corresponding beam element and as an element for eliminating the play between the beam element and the respective seat.

In particular, one can also appreciate that the provision of said inclined surfaces for arresting the corresponding beam elements in the widened track gauge condition, in correspondence with the inlet of the corresponding seats and of the free extremity of the corresponding beam element, allow to provide, with respect to prior art undercarriages for the same widening, a reduced overhang which allows a lesser stress and flexure of the beam element.

These effects of blocking and reducing the flexing actions, obtained by means of the aforementioned inclined surfaces for arresting the corresponding beam elements in the widened track gauge condition, is, moreover, advantageous in that it also allows to obviate any horizontal play which occurs between the extraction beams and the corresponding seat when the undercarriage is steered to change direction.

It should also be stressed that one could imagine, for the present invention, the use of extracting beams and corresponding seats having a section other than quadrangular, for instance a circular, trapezoidal or polygonal section.

## Claims

1. An undercarriage (10) with variable track gauge comprising a main frame (12) defining a first and a second mutually opposite flanks (14, 16), a first and a second sub-frame (18, 20) each for supporting respective driving means (22, 24) of the undercarriage positioned each in correspondence with a respective one of said first and second flank (14, 16) of the main frame (12), wherein said main frame (12) presents in correspondence with each of said first and second flanks (14, 16) at least a respective seat (26, 28, 30, 32), for the sliding housing of a corresponding beam element (34, 36, 38, 40) extending from the respective sub-frame (18, 20), and wherein means, in the form of respective hydraulic cylinders (42, 44), are provided for moving said first and second sub-frame (18, 20) between at least a first position with reduced track gauge, wherein said first and second sub-frame (18, 20) are approached to the respective flank (14, 16) and the respective beam elements (34, 36, 38, 40) are recessed in the respective seats (26, 28, 30, 32), and a second position with widened track gauge, wherein at least one of said first and second sub-frame (18, 20) is moved away from the respective flank (14, 16) and the respective beam element (34, 36, 38, 40) extends to the exterior of the respective seat (26, 28, 30, 32), the undercarriage comprising means for blocking the sliding of the respective beam elements (34, 36, 38, 40) within the corresponding seat (26, 28, 30, 32) comprising a first inclined surface (46, 48) positioned within the respective seat (26, 28) and a second inclined surface (50, 52) positioned in correspondence with the outer profile of the respective beam element (34, 36) and co-operating with said first inclined surface (46, 48) to fasten the beam element within the respective seat (26, 28); the undercarriage being **characterised in that**, for maintaining the beam elements (34, 36, 38, 40) in the position of widened track gauge, it comprises solely:
- said first inclined surface (46, 48) having an angular position with respect to the horizontal ranging between 1° and 20°,
- said first inclined surface (46, 48) and said second inclined surface (50, 52) extending over the entire width of the respective seat (26, 28), and
- a level of pressure in said hydraulic cylinders sufficient to maintain said beam elements in said condition of widened track.

2. Undercarriage according to claim 1, **characterised in that** each beam element (34, 36, 38, 40) is connected at an extremity (34a, 36a, 38a, 40a) and extending in overhang from the respective sub-frame (18, 20) terminating with a free extremity (34b, 36b, 38b, 40b) for insertion into the respective seat (26, 28, 30, 32).

3. Undercarriage according to either of the previous claims, **characterised in that** said first inclined surface (46, 48) positioned within the respective seat (26, 28, 30, 32) and said second inclined surface (50, 52) in correspondence with the outer profile of the respective beam element (34, 36, 38, 40) are oriented in such a way as to block the sliding of the respective beam element (34, 36, 38, 40) in the corresponding seat (26, 28, 30, 32) when the respective beam element (34, 36, 38, 40) extends outwards.

4. Undercarriage according to any of the previous claims, **characterised in that** said main frame (12) presents in correspondence with each of said first and second flanks (14, 16) respective first and second seat (26, 28, 30, 32) for the sliding housing of respective first and second beam element (34, 36, 38, 40) extending from the respective track-bearing sub-frame (18, 20), said first and second seat (26, 28, 30, 32) and said first and second beam element (34, 36, 38, 40) being longitudinally distanced from each other.

5. Undercarriage according to any of the previous claims, **characterised in that** each seat (26, 28, 30, 32) presents a quadrangular section and each beam element (34, 36, 38, 40) presents a quadrangular box profile.

6. Undercarriage according to any of the previous claims, **characterised in that** the first inclined surface (46, 48) is positioned in the vicinity of the outer edge of the respective seat (26, 28).

7. Undercarriage according to any of the previous claims, **characterised in that** said second inclined surface (50, 52) is provided in the vicinity of the free extremity of the respective beam element (34, 36).

8. Undercarriage according to any of the previous claims, **characterised in that** said first inclined surface (46, 48) is provided on the lower side of the respective seat (26, 28) and said second inclined surface (50, 52) is provided on the lower side of the respective beam element (34, 36) in such a way as to act to thrust vertically said beam element (34, 36) upwards.

9. Undercarriage according to claim 1, **characterised in that** said first inclined surface (46, 48) presents a preferred angular position with respect to the horizontal equal to 4° to 6°.

10. Undercarriage according to any of the previous claims, **characterised in that** said second inclined surface (50, 52) is defined by a progressive widening downwards of the cross section of the respective beam element (34, 36).

11. Undercarriage according to any of the previous claims, **characterised in that** means are provided for adjusting the vertical position of said first inclined surface (46, 48).

12. Undercarriage according to any of the previous claims, **characterised in that** means are provided for adjusting the inclination of said first inclined surface (46, 48).

13. Undercarriage according to any of the previous claims, **characterised in that** it comprises means for blocking the re-entry of the respective beam element (34, 36) into the corresponding seat (26, 28), said means for blocking re-entry being in the form of a first inclined face (58, 60) positioned within the seat (26, 28) and of a second inclined face (62, 64) integral with the respective beam element (34, 36) and co-operating with said first face (58, 60) in the seat (26, 28) to fasten, when the respective beam element (34, 36) is made to re-enter in the seat (26, 28), the beam element (34, 36) itself in the respective seat (26, 28).

14. Undercarriage according to claim 13, **characterised in that** said first inclined face (58, 60) in the seat (26, 28) is situated in the vicinity of the inlet of said seat (26, 28) for housing the beam element (34, 36).

15. Undercarriage according to claim 13 or 14, **characterised in that** said second inclined face (62, 64) integral with the respective beam element (34, 36) is situated in correspondence with the extremity (34a, 36a) of said beam element (34, 36) which extends from the respective sub-frame (18, 20).

16. Undercarriage according to any of the previous claims from 13 to 15, **characterised in that** said first inclined face (58, 60) in the seat (26, 28) extends over the entire length of the respective seat (26, 28).

17. Undercarriage according to any of the previous claims from 13 to 16, **characterised in that** said second inclined face (62, 64) integral with the beam element (34, 36) extends over the entire width of the respective beam element (34, 36).

18. Undercarriage according to any of the previous claims from 13 to 17, **characterised in that** the first inclined face (62, 64) in the respective seat (26, 28) is provided on the lower side of the seat (26, 28) and said second inclined face (62, 64) integral with the respective beam element (34, 36) is provided on the lower side of the same beam element (34, 36) in such a way as to act to thrust said beam element (34, 36) upwards.

19. Undercarriage according to any of the previous claims from 14 to 18, **characterised in that** means are provided for adjusting the vertical position of said first inclined face (62, 64) in the respective seat (26, 28).

20. Undercarriage according to any of the previous claims, **characterised in that** the respective first inclined surface (46, 48) for blocking the extraction of the respective beam element is defined by a respective wedge element (66, 68), means being provided for fastening said wedge element (66, 68) within the respective seat (26, 28).

21. Undercarriage according to claim 20, **characterised in that** said means for fastening said one wedge element (66, 68) defining the first inclined surface (46,48) are able to fasten said wedge element (66, 68) in removable manner within the respective seat (26, 28).

22. Undercarriage according to claim 21, **characterised in that** said means for fastening the wedge element (66, 68) in a removable manner comprise an elongated bolt (70, 72) which is inserted within a first recess (74, 76) in correspondence with a surface of said seat (26, 28) and within a second recess (78, 80) provided in said wedge element (66, 68) in correspondence with the engagement surface with said surface for the first recess (74, 76) of said seat (26, 28).

23. Undercarriage according to any of the previous claims from 14 to 22, **characterised in that** said first inclined face (58, 60) positioned within the seat (26, 28) for blocking the re-entry of the respective beam element (34, 36) is situated on said wedge element (66, 68) and is longitudinally aligned to said firs surface (46, 48) for blocking the outward extension of the beam element (34, 36) presenting an inclination opposite thereto.

24. Undercarriage according to any of the previous claims from 11 to 23, **characterised in that** said means for adjusting the height position of said first inclined position (46, 48) and/or said first inclined surface (58, 60) comprise at least one adjustment grub screw (82, 84, 86, 88) movable bi-directionally and engaging against the side of said wedge element (66, 68) which is opposite the one for engaging with the respective beam element (34, 36).

25. Undercarriage according to any of the previous claims from 12 to 24, **characterised in that** said means for adjusting the inclination of said first inclined surface comprise at least one adjustment grub screw (82, 84, 86, 88) eccentrically engaging against the side of said wedge element (66, 68) which is opposite the one engaging with the respective beam element (34, 36).

26. Undercarriage according to either of the previous claims 24 or 25, **characterised in that** it comprises a first and a second series of adjustment grub screws (82, 84, 86, 88) longitudinally distanced from each other within the seat (26, 28).

27. Undercarriage according to any of the previous claims from 2 to 26, **characterised in that** the corresponding seats (26, 28) provided on opposite flanks (14, 16) of said main frame (12) are realised by a respective housing cavity elongated transversely, means are provided for simultaneously adjusting, in the recessed position within the respective seat, the vertical position of the free extremities (34b, 36b) of the beam elements (34, 36) extending within the opposite seats (26, 28) of the main frame (12).

28. Undercarriage according to claim 27, **characterised in that** said means for simultaneously adjusting the vertical position of the free extremities (34b, 36b) of said beam elements (34, 36) in the recessed position within the opposite seats (26, 28) of the main frame (12) comprise at least a central plate (90) for supporting said free extremities (34b, 36b) of said beam elements (34, 36) and means for moving bilaterally in the vertically said plate (90) in the form of at least one adjustment grub screw (92, 94) engaging against the face of said plate element (90) which is opposite the face for supporting the free ends (34b, 36b) of said beam elements (34, 36).

29. Undercarriage according to either of the previous claims 27 or 28, **characterised in that** said central plate (92) within the cavity defining opposite seats (26, 28) of the main frame is positioned in such a way as to thrust the free extremities (34b, 36b) to engage against an opposite surface in the seat (26, 28).

30. Undercarriage according to any of the previous claims, **characterised in that** means are provided for lubricating said first and second inclined surfaces (46, 48, 50, 52) for blocking the extraction of the respective beam element from the corresponding seat (26, 28).

31. Undercarriage according to claim 30, **characterised in that** said means for lubricating said first and second inclined surface (46, 48, 50, 52) comprise a plurality of lubrication conduits (96, 98) on said first inclined surface.

32. Undercarriage according to claim 31, **characterised in that** said lubrication conduits comprise at least a primary longitudinal channel (96) transversely whereto extend a plurality of secondary conduits (98).

33. Undercarriage according to any of the previous claims from 14 to 33, **characterised in that** the preferred inclination for said inclined faces (58, 60) for arresting the beam elements in closing the sub-frames on the main frame ranges between 35° and 80°, preferably equal to 40 ° to 60°.

## Patentansprüche

1. Fahrgestell (10) mit veränderbarer Spurweite, enthaltend einen Hauptrahmen (12), der erste und zweite sich gegenüberliegende Flanken (14, 16) beschreibt, einen ersten und zweiten Unterrahmen (18, 20), jeder zum Tragen von entsprechenden Antriebsmitteln (22, 24) des Fahrgestells, jedes an einer jeweiligen der genannten ersten und zweiten Flanken (14, 16) des Hauptrahmens (12) angeordnet, wobei der genannte Hauptrahmen (12) an einer jeden der genannten ersten und zweiten Flanken (14, 16) wenigstens einen jeweiligen Sitz (26, 28, 30, 32) zur gleitenden Aufnahme eines entsprechenden Trägerelementes (34, 36, 38, 40) aufweist, das sich von dem jeweiligen Unterrahmen (18, 20) aus erstreckt, und wobei. Mittel in Form von jeweiligen Hydraulikzylindern (42, 44) vorgesehen sind, um die genannten ersten und zweiten Unterrahmen (18, 20) zwischen wenigstens einer ersten Position mit reduzierter Spurweite, in welcher die genannten ersten und zweiten Unterrahmen (18, 20) an die jeweiligen Flanken (14, 16) herangeführt und die jeweiligen Trägerelemente (34, 36, 38, 40) in die jeweiligen Sitze (26, 28, 30, 32) zurückgelaufen sind, und einer zweiten Position mit verbreiterter Spurweite, in welcher wenigstens einer der genannten ersten und zweiten Unterrahmen (18, 20) von der jeweiligen Flanke (14, 16) entfernt ist und das jeweilige Trägerelement (34, 36, 38, 40) sich ausserhalb des jeweiligen Sitzes (26, 28, 30, 32) erstreckt, wobei das Fahrgestell Mittel zum Blockieren der Gleitbewegung der jeweiligen Trägerelemente (34, 36, 38, 40) im Inneren des entsprechenden Sitzes (26, 28, 30, 32) enthält, bestehend aus einer ersten schrägen Fläche (46, 48), die im Inneren des jeweiligen Sitzes (26, 28) angeordnet ist, und einer zweiten schrägen Fläche (50, 52), angeordnet an dem äusseren Profil des jeweiligen Trägerelementes (34, 36) und mit der genannten ersten schrägen Fläche (46, 48) zusammen-arbeitend, um das Trägerelement in dem jeweiligen Sitz (26, 28) festzuklemmen; wobei das Fahrgestell **dadurch gekennzeichnet ist, dass** es zum Halten der Trägerelemente (34, 36, 38, 40) in der Position der verbreiterten Spurweite ausschliesslich enthält:
- die genannte erste schräge Fläche (46, 48), die im Verhältnis zur Horizontalen eine Winkelposition hat, die zwischen 1° und 20° liegt;
- die genannte erste schräge Fläche (46, 48) und die genannte zweite schräge Fläche (50, 52), die sich über die gesamte Breite des jeweiligen Sitzes (26, 28) erstrecken, und
- einen Druckwert in den genannten Hydraulikzylindern, der ausreicht, um die genannten Trägerelemente in dem genannten Zustand der verbreiterten Spurweite zu halten.

2. Fahrgestell nach Patentanspruch 1, **dadurch gekennzeichnet, dass** jedes Trägerelement (34, 36, 38, 40) mit einem Ende (34a, 36a, 38a, 40a) an einen jeweiligen Unterrahmen (18, 20) angeschlossen ist und sich von diesem aus überstehend erstreckt, wobei es mit einem freien Ende (34b, 36b, 38b, 40b) zum Einschieben in den jeweiligen Sitz (26, 28, 30, 32) endet.

3. Fahrgestell nach einem jeden der vorstehenden Patentansprüche, **dadurch gekennzeichnet, dass** die genannte erste schräge Fläche (46, 48), angeordnet in dem jeweiligen Sitz (26, 28, 30, 32), und die genannte zweite schräge Fläche (50, 52) an dem äusseren Profil des jeweiligen Trägerelementes (34, 36, 38, 40) auf solche Weise ausgerichtet sind, dass sie die Gleitbewegung des jeweiligen Trägerelementes (34, 36, 38, 40) in dem entsprechenden Sitz (26, 28, 30, 32) blockieren, wenn sich das jeweilige Trägerelement (34, 36, 38, 40) nach aussen hin ausdehnt.

4. Fahrgestell nach einem jeden der vorstehenden Patentansprüche, **dadurch gekennzeichnet, dass** der genannte Hauptrahmen (12) an einer jeden der genannten ersten und zweiten Flanken (14, 16) jeweilige erste und zweite Sitze (26, 28, 30, 32) aufweisen, und zwar zur gleitenden Aufnahme des jeweiligen ersten und zweiten Trägerelementes (34, 36, 38, 40), das sich von dem Raupenhalter-Unterrahmen (18, 20) aus erstreckt, wobei die genannten ersten und zweiten Sitze (26, 28, 30, 32) und die genannten ersten und zweiten Trägerelemente (34, 36, 38, 40) in Längsrichtung einen Abstand voneinander haben.

5. Fahrgestell nach einem jeden der vorstehenden Patentansprüche, **dadurch gekennzeichnet, dass** jeder Sitz (26, 28, 30, 32) einen viereckigen Querschnitt aufweist und jedes Trägerelement (34, 36, 38, 40) ein viereckiges, kastenförmiges Profil hat.

6. Fahrgestell nach einem jeden der vorstehenden Patentansprüche, **dadurch gekennzeichnet, dass** die erste schräge Fläche (46, 48) in der Nähe des äusseren Randes des jeweiligen Sitzes (26, 28) angeordnet ist.

7. Fahrgestell nach einem jeden der vorstehenden Patentansprüche, **dadurch gekennzeichnet, dass** die genannte zweite schräge Fläche (50, 52) in der Nähe des freien Endes des jeweiligen Trägerelementes (34, 36) vorgesehen ist.

8. Fahrgestell nach einem jeden der vorstehenden Patentansprüche, **dadurch gekennzeichnet, dass** die genannte erste schräge Fläche (46, 48) an der unteren Wand des jeweiligen Sitzes (26, 28) vorgesehen ist, und dass die genannte zweite schräge Fläche (50, 52) an der unteren Seite des jeweiligen Trägerelementes (34, 36) vorgesehen ist, und zwar auf solche Weise wirkend, dass das genannte Trägerelement (34, 36) nach oben gedrückt wird.

9. Fahrgestell nach Patentanspruch 1, **dadurch gekennzeichnet, dass** die genannte erste schräge Fläche (46, 48) im Verhältnis zu der Horizontalen eine vorgezogene Winkelposition entsprechend 4° bis 6° aufweist.

10. Fahrgestell nach einem jeden der vorstehenden Patentansprüche, **dadurch gekennzeichnet, dass** die genannte zweite schräge Fläche (50, 52) durch eine allmähliche Erweiterung nach unten des Querschnitts des jeweiligen Trägerelementes (34, 36) beschrieben wird.

11. Fahrgestell nach einem jeden der vorstehenden Patentansprüche, **dadurch gekennzeichnet, dass** Mittel zum Einstellen der vertikalen Position der genannten ersten schrägen Fläche (46, 48) vorgesehen sind.

12. Fahrgestell nach einem jeden der vorstehenden Patentansprüche, **dadurch gekennzeichnet, dass** Mittel zum Einstellen der Neigung der genannten ersten schrägen Fläche (46, 48) vorgesehen sind.

13. Fahrgestell nach einem jeden der vorstehenden Patentansprüche, **dadurch gekennzeichnet, dass** es Mittel zum Blockieren des Rücklaufs des jeweiligen Trägerelementes (34, 36) in den entsprechenden Sitz (26, 28) enthält, wobei die genannten Mittel zum Blockieren des Rücklaufs in Form einer ersten schrägen Fläche (58, 60), angeordnet im Inneren des Sitzes (26, 28), und einer zweiten schrägen Fläche (62, 64) ausgelegt sind, die an das jeweilige Trägerelement (34, 36) angearbeitet ist und mit der genannten ersten Fläche (58, 60) zusammenarbeitet, um, wenn das jeweilige Trägerelement (34, 36) in den Sitz (26, 28) eintritt, das Trägerelement (34, 36) selbst in dem jeweiligen Sitz (26, 28) festzuklemmen.

14. Fahrgestell nach Patentanspruch 13, **dadurch gekennzeichnet, dass** die genannte erste schräge Fläche (58, 60) in dem Sitz (26, 28) in der Nähe des Eintritts in den genannten Sitz (26, 28) zur Aufnahme des Trägerelementes (34, 36) angeordnet ist.

15. Fahrgestell nach Patentanspruch 13 oder 14, **dadurch gekennzeichnet, dass** die genannte, an das jeweilige Trägerelement (34, 36) angearbeitete zweite schräge Fläche (62, 64) in der Nähe des Endes (34a, 36a) des genannten Trägerelementes (34, 36) angeordnet ist, das sich von dem jeweiligen Unterrahmen (18, 20) aus erstreckt.

16. Fahrgestell nach einem jeden der vorstehenden Patentansprüche von 13 bis 15, **dadurch gekennzeichnet, dass** die genannte erste schräge Fläche (58, 60) in dem Sitz (26, 28) sich über die gesamte Breite des jeweiligen Sitzes (26, 28) erstreckt.

17. Fahrgestell nach einem jeden der vorstehenden Patentansprüche von 13 bis 16, **dadurch gekennzeichnet, dass** die genannte zweite schräge Fläche (62, 64), die an das Trägerelement (34, 36) angearbeitet ist, sich über die gesamte Breite des jeweiligen Trägerelementes (34, 36) erstreckt.

18. Fahrgestell nach einem jeden der vorstehenden Patentansprüche von 13 bis 17, **dadurch gekennzeichnet, dass** die erste schräge Fläche (62, 64) in dem jeweiligen Sitz (26, 28) an der unteren Wand des Sitzes (26, 28) vorgesehen ist, und dass die genannte, an das jeweilige Trägerelement (34, 36) angearbeitete zweite schräge Fläche (62, 64) an der unteren Seite desselben Trägerelementes (34, 36) vorgesehen ist, und zwar auf solche Weise wirkend, dass das genannte Trägerelement (34, 36) nach oben gedrückt wird.

19. Fahrgestell nach einem jeden der vorstehenden Patentansprüche von 14 bis 18, **dadurch gekennzeichnet, dass** Mittel zum Einstellen der vertikalen Position der genannten ersten schrägen Fläche (62, 64) in dem jeweiligen Sitz (26, 28) vorgesehen sind.

20. Fahrgestell nach einem jeden der vorstehenden Patentansprüche, **dadurch gekennzeichnet, dass** die jeweilige erste geneigte Fläche (46, 48) zum Blockieren des Herausziehens des jeweiligen Trägerelementes durch ein jeweiliges Keilelement (66, 68) beschrieben wird, wobei Mittel zum Befestigen des genannten Keilelementes (66, 68) in dem jeweiligen Sitz (26, 28) vorgesehen sind.

21. Fahrgestell nach Patentanspruch 20, **dadurch gekennzeichnet, dass** die genannten Mittel zum Befestigen des genannten einen, die erste schräge Fläche (46, 48) beschreibenden Keilelementes (66, 68) geeignet sind, das genannte Keilelement (66, 68) auf lösbare Weise im Inneren des jeweiligen Sitzes (26, 28) zu befestigen.

22. Fahrgestell nach Patentanspruch 21, **dadurch gekennzeichnet, dass** die genannten Mittel zum Befestigen des Keilelementes (66, 68) auf eine lösbare Weise einen verlängerten Bolzen (70, 72) enthalten, welcher in eine erste Vertiefung (74, 76) an einer Oberfläche des genannten Sitzes (26, 28) eingesetzt wird, sowie in eine zweite Vertiefung (78, 80), die an dem genannten Keilelement (66, 68) vorgesehen ist, und zwar entsprechend zu der Fläche zum Verbinden mit der genannten Fläche für die erste Vertiefung (74, 76) des genannten Sitzes (26, 28).

23. Fahrgestell nach einem jeden der vorstehenden Patentansprüche von 14 bis 22, **dadurch gekennzeichnet, dass** die genannte erste schräge Fläche (58, 60), angeordnet im Inneren des Sitzes (26, 28) zum Blockieren des Rücklaufs des jeweiligen Trägerelementes (34, 36), an dem genannten Keilelement (66, 68) positioniert und in Längsrichtung zu der genannten ersten Fläche (46, 48) zum Blockieren des Herausziehens des Trägerelementes (34, 36) ausgerichtet ist, welche zu dieser eine entgegengesetzte Neigung aufweist.

24. Fahrgestell nach einem jeden der vorstehenden Patentansprüche von 11 bis 23, **dadurch gekennzeichnet, dass** die genannten Mittel zum Einstellen der Höhenposition der genannten ersten schrägen Fläche (46, 48) und/oder der genannten ersten schrägen Fläche (58, 60) wenigstens eine Stiftschraube (82, 84, 86, 88) zum Einstellen enthalten, die in beiden Richtungen beweglich ist und gegen die Seite des genannten Keilelementes (66, 68) drückt, die sich entgegengesetzt von der zum Verbinden mit dem genannten Trägerelement (34, 36) befindet.

25. Fahrgestell nach einem jeden der vorstehenden Patentansprüche von 12 bis 24, **dadurch gekennzeichnet, dass** die genannten Mittel zum Einstellen der Neigung der genannten ersten schrägen Fläche wenigstens eine Stiftschraube (82, 84, 86, 88) zum Einstellen enthalten, die exzentrisch gegen die Seite des genannten Keilelementes (66, 68) drückt, welche entgegengesetzt zu der liegt, die mit dem jeweiligen Trägerelement (34, 36) im Eingriff ist.

26. Fahrgestell nach einem der vorstehenden Patentansprüche 24 oder 25, **dadurch gekennzeichnet, dass** es eine erste und eine zweite Serie von Stiftschrauben (82, 84, 86, 88) zum Einstellen enthält, die innerhalb des Sitzes (26, 28) in Längsrichtung einen Abstand voneinander haben.

27. Fahrgestell nach einem jeden der vorstehenden Patentansprüche von 2 bis 26, **dadurch gekennzeichnet, dass** die entsprechenden, an den sich gegenüberliegenden Flanken (14, 16) des genannten Hauptrahmens (12) vorgesehenen Sitze (26, 28) aus einer jeweiligen, in Querrichtung verlängerten Aufnahmevertiefung bestehen, wobei Mittel zum gleichzeitigen Einstellen, in der in den jeweiligen Sitz eingeschobenen Position, der vertikalen Position der freien Enden (34b, 36b) der Trägerelemente (34, 36) vorgesehen sind, die sich in die gegenüberliegenden Sitze (26, 28) des Hauptrahmens (12) erstrecken.

28. Fahrgestell nach Patentanspruch 27, **dadurch gekennzeichnet, dass** die genannten Mittel zum gleichzeitigen Einstellen der vertikalen Position der freien Enden (34b, 36b) der genannten Trägerelemente (34, 36) in der in die gegenüberliegenden Sitze (26, 28) des Hauptrahmens (12) eingeschobenen Position wenigstens eine mittlere Platte (90) zum Stützen der genannten freien Enden (34b, 36b) der genannten Trägerelemente (34, 36) enthalten, sowie Mittel zum vertikalen Verschieben der genannten Platte (90) in beiden Richtungen, und zwar in Form von wenigstens einer Stellschraube (92, 94), die gegen die Fläche der genannten Platte (90) drückt, die auf der anderen Seite der Fläche zum Stützen der freien Enden (34b, 36b) der genannten Trägerelemente (34, 36) liegt.

29. Fahrgestell nach einem der vorstehenden Patentansprüche 27 oder 28, **dadurch gekennzeichnet, dass** die genannte mittlere Platte (92) im Inneren der die entgegengesetzten Sitze (26, 28) des Hauptrahmens bildenden Vertiefung auf solche Weise positioniert ist, dass sie die freien Enden (34b, 36b) gegen die entgegengesetzte Oberfläche in dem Sitz (26, 28) drückt.

30. Fahrgestell nach einem jeden der vorstehenden Patentansprüche, **dadurch gekennzeichnet, dass** Mittel zum Schmieren der genannten ersten und zweiten schrägen Flächen (46, 48, 50, 52) zum Blockieren des Herausziehens des jeweiligen Trägerelementes aus dem entsprechenden Sitz (26, 28) vorgesehen sind.

31. Fahrgestell nach Patentanspruch 30, **dadurch gekennzeichnet, dass** die genannten Mittel zum Schmieren der genannten ersten und zweiten schrägen Flächen (46, 48, 50, 52) eine Anzahl von Schmierkanälen (96, 98) an der genannten ersten schrägen Fläche enthält.

32. Fahrgestell nach Patentanspruch 31, **dadurch gekennzeichnet, dass** die genannten Schmierkanäle wenigstens einen längsverlaufenden Hauptkanal (96) enthalten, zu welchem querverlaufend sich eine Anzahl von Nebenkanälen (98) erstreckt.

33. Fahrgestell nach einem jeden der vorstehenden Patentansprüche von 14 bis 33, **dadurch gekennzeichnet, dass** die vorgezogene Neigung der genannten schrägen Flächen (58, 60) zum Festklemmen der Trägerelemente im Schliesszustand der Unterrahmen an dem Hauptrahmen zwischen 35° und 80° liegt, vorzugsweise 40° bis 60°.

## Revendications

1. Un train de roulement (10) à gabarit d'écartement variable comprenant un châssis principal (12) définissant un premier et un deuxième flancs (14, 16) réciproquement opposés, un premier et un deuxième sous-châssis (18, 20) destinés à supporter chacun des moyens de traction (22, 24) du train de roulement et situés chacun au niveau d'un des premier et deuxième flancs (14, 16) respectifs du châssis principal (12), où ledit châssis principal (12) présente au niveau de chacun des premier et deuxième flancs (14, 16) au moins un logement respectif (26, 28, 30, 32) destiné à loger de manière coulissante une traverse (34, 36, 38, 40) correspondante s'étendant depuis le sous-châssis (18, 20) respectif, et où des moyens, consistant en des vérins hydrauliques (42, 44) respectifs, sont prévus pour déplacer lesdits premier et deuxième sous-châssis (18, 20) entre au moins une première position à gabarit d'écartement réduit, dans laquelle lesdits premier et deuxième sous-châssis (18, 20) sont rapprochés du flanc (14, 16) respectif et les traverses (34, 36, 38, 40) respectives sont rentrées dans les logements (26, 28, 30, 32) respectifs, et une deuxième position à gabarit d'écartement élargi, dans laquelle au moins l'un des premier et deuxième sous-châssis (18, 20) est éloigné du flanc (14, 16) respectif et la traverse (34, 36, 38, 40) respective s'étend à l'extérieur du logement (26, 28, 30, 32) respectif, le train de roulement comprenant des moyens destinés à bloquer le coulissement des traverses (34, 36, 38, 40) respectives dans le logement (26, 28, 30, 32) correspondant et constitués par une première surface inclinée (46, 48) située dans le logement (26, 28) respectif et une deuxième surface inclinée (50, 52) située au niveau du profil externe de la traverse (34, 36) respective et coopérant avec ladite première surface inclinée (46, 48) pour serrer la traverse dans le logement (26, 28) respectif ; le train de roulement étant **caractérisé en ce qu'**il comprend uniquement, pour maintenir les traverses (34, 36, 38, 40) dans la position de gabarit d'écartement élargi :
- ladite première surface inclinée (46, 48) ayant une position angulaire par rapport à l'horizontale comprise entre 1° et 20°,
- ladite première surface inclinée (46, 48) et ladite deuxième surface inclinée (50, 52) s'étendant sur toute la largeur du logement (26, 28) respectif, et
- un niveau de pression dans lesdits vérins hydrauliques suffisant pour maintenir lesdites traverses dans ladite condition d'écartement élargi.

2. Le train de roulement selon la revendication 1, **caractérisé en ce que** chaque traverse (34, 36, 38, 40) est reliée à une extrémité (34a, 36a, 38a, 40a) et s'étend en saillie depuis le sous-châssis (18, 20) respectif, se terminant par une extrémité libre (34b, 36b, 38b, 40b) destinée à s'introduire dans le logement (26, 28, 30, 32) respectif.

3. Le train de roulement selon l'une ou l'autre des revendications précédentes, **caractérisé en ce que** ladite première surface inclinée (46, 48) située dans le logement (26, 28, 30, 32) respectif et ladite deuxième surface inclinée (50, 52) au niveau du profil externe de la traverse (34, 36, 38, 40) respective sont orientées de manière à bloquer le coulissement de la traverse (34, 36, 38, 40) respective dans le logement (26, 28, 30, 32) correspondant quand la traverse (34, 36, 38, 40) respective s'étend vers l'extérieur.

4. Le train de roulement selon l'une quelconque des revendications précédentes, **caractérisé en ce que** ledit châssis principal (12) présente, au niveau de chacun des premier et deuxième flancs (14, 16), des premier et deuxième logements (26, 28, 30, 32) respectifs destinés à loger de manière coulissante des première et deuxième traverses (34, 36, 38, 40) respectives s'étendant depuis le sous-châssis porte-chenille (18, 20) respectif, lesdits premier et deuxième logements (26, 28, 30, 32) et lesdites première et deuxième traverses (34, 36, 38, 40) étant longitudinalement distancés entre eux.

5. Le train de roulement selon l'une quelconque des revendications précédentes, **caractérisé en ce que** chaque logement (26, 28, 30, 32) présente une section quadrangulaire et **en ce que** chaque traverse (34, 36, 38, 40) présente un profil de contour quadrangulaire.

6. Le train de roulement selon l'une quelconque des revendications précédentes, **caractérisé en ce que** ladite première surface inclinée (46, 48) est située à proximité du bord extérieur du logement (26, 28) respectif.

7. Le train de roulement selon l'une quelconque des revendications précédentes, **caractérisé en ce que** ladite deuxième surface inclinée (50, 52) est prévue à proximité de l'extrémité libre de la traverse (34, 36) respective.

8. Le train de roulement selon l'une quelconque des revendications précédentes, **caractérisé en ce que** ladite première surface inclinée (46, 48) est prévue sur le côté inférieur du logement (26, 28) respectif et ladite deuxième surface inclinée (50, 52) est prévue sur le côté inférieur de la traverse (34, 36) respective de manière à agir pour pousser verticalement ladite traverse (34, 36) vers le haut.

9. Le train de roulement selon la revendication 1, **caractérisé en ce que** ladite première surface inclinée (46, 48) présente une position angulaire préférée par rapport à l'horizontale comprise entre 4° et 6°.

10. Le train de roulement selon l'une quelconque des revendications précédentes, **caractérisé en ce que** ladite deuxième surface inclinée (50, 52) est définie par un élargissement progressif vers le bas de la section transversale de la traverse (34, 36) respective.

11. Le train de roulement selon l'une quelconque des revendications précédentes, **caractérisé en ce que** des moyens sont prévus pour régler la position verticale de ladite première surface inclinée (46, 48).

12. Le train de roulement selon l'une quelconque des revendications précédentes, **caractérisé en ce que** des moyens sont prévus pour régler l'inclinaison de ladite première surface inclinée (46, 48).

13. Le train de roulement selon l'une quelconque des revendications précédentes, **caractérisé en ce qu'**il comprend des moyens pour bloquer la rentrée de la traverse (34, 36) respective dans le logement (26, 28) correspondant, lesdits moyens pour bloquer cette rentrée étant constitués par une première face inclinée (58, 60) située dans le logement (26, 28) et une deuxième face inclinée (62, 64) solidaire de la traverse (34, 36) respective et coopérant avec ladite première face (58, 60) dans le logement (26, 28) pour serrer, quand la traverse (34, 36) respective est rentrée dans le logement (26, 28), cette même traverse (34, 36) dans le logement (26, 28) respectif.

14. Le train de roulement selon la revendication 13, **caractérisé en ce que** ladite première face inclinée (58, 60) dans le logement (26, 28) est située à proximité de l'ouverture du logement (26, 28) en question destiné à loger la traverse (34, 36).

15. Le train de roulement selon la revendication 13 ou 14, **caractérisé en ce que** ladite deuxième face inclinée (62, 64) solidaire de la traverse (34, 36) respective est située au niveau de l'extrémité (34a, 36a) de ladite traverse (34, 36) qui s'étend depuis le sous-châssis (18, 20) respectif.

16. Le train de roulement selon l'une quelconque des revendications précédentes de 13 à 15, **caractérisé en ce que** ladite première face inclinée (58, 60) dans le logement (26, 28) s'étend sur toute la longueur du logement (26, 28) respectif.

17. Le train de roulement selon l'une quelconque des revendications précédentes de 13 à 16, **caractérisé en ce que** ladite deuxième face inclinée (62, 64) solidaire de la traverse (34, 36) s'étend sur toute la largeur de la traverse (34, 36) respective.

18. Le train de roulement selon l'une quelconque des revendications précédentes de 13 à 17, **caractérisé en ce que** ladite première face inclinée (58, 60) dans le logement (26, 28) respectif est prévue sur le côté inférieur du logement (26, 28) et ladite deuxième face inclinée (62, 64) solidaire de la traverse (34, 36) respective est prévue sur le côté inférieur de cette même traverse (34, 36) de manière à agir pour pousser ladite traverse (34, 36) vers le haut.

19. Le train de roulement selon l'une quelconque des revendications précédentes de 14 à 18, **caractérisé en ce que** des moyens sont prévus pour régler la position verticale de ladite première face inclinée (58, 60) dans le logement (26, 28) respectif.

20. Le train de roulement selon l'une quelconque des revendications précédentes, **caractérisé en ce que** ladite première surface inclinée (46, 48) respective destinée à bloquer la sortie de la traverse respective est définie par un élément-coin (66, 68) respectif, des moyens étant prévus pour fixer ledit élément-coin (66, 68) dans le logement (26, 28) respectif.

21. Le train de roulement selon la revendication 20, **caractérisé en ce que** lesdits moyens de fixation de l'élément-coin (66, 68) définissant la première surface inclinée (46, 48) sont en mesure de fixer ledit élément-coin (66, 68) de manière amovible dans le logement (26, 28) respectif.

22. Le train de roulement selon la revendication 21, **caractérisé en ce que** lesdits moyens de fixation amovible de l'élément-coin (66, 68) comprennent un corps de pêne allongé (70, 72) qui est introduit dans un premier renfoncement (74, 76) au niveau d'une surface du logement (26, 28) susmentionné et dans un deuxième renfoncement (78, 80) réalisé dans ledit élément-coin (66, 68) au niveau de la surface d'engagement avec ladite surface comportant le premier renfoncement (74, 76) du logement (26, 28) en question.

23. Le train de roulement selon l'une quelconque des revendications précédentes de 14 à 22, **caractérisé en ce que** ladite première face inclinée (58, 60) positionnée dans le logement (26, 28) pour bloquer la rentrée de la traverse (34, 36) respective est située sur ledit élément-coin (66, 68) et est longitudinalement alignée par rapport à ladite première surface (46, 48) destinée à bloquer l'extension vers l'extérieur de la traverse (34, 36) et qui présente une inclinaison opposée à celle-ci.

24. Le train de roulement selon l'une quelconque des revendications précédentes de 11 à 23, **caractérisé en ce que** lesdits moyens de réglage de la position en hauteur de ladite première surface inclinée (46, 48) et/ou de ladite première face inclinée (58, 60) comprennent au moins une vis sans fin de réglage (82, 84, 86, 88) mobile bidirectionnellement et assujettissant le côté de l'élément-coin (66, 68) susmentionné qui est opposé à celui qui assujettit la traverse (34, 36) respective.

25. Le train de roulement selon l'une quelconque des revendications précédentes de 12 à 24, **caractérisé en ce que** lesdits moyens de réglage de l'inclinaison de ladite première surface inclinée comprennent au moins une vis sans fin de réglage (82, 84, 86, 88) assujettissant excentriquement le côté de l'élément-coin (66, 68) susmentionné qui est opposé à celui qui assujettit la traverse (34, 36) respective.

26. Le train de roulement selon l'une ou l'autre des revendications précédentes 24 ou 25, **caractérisé en ce qu'**il comprend une première et une deuxième séries de vis sans fin de réglage (82, 84, 86, 88) longitudinalement distancées entre elles dans le logement (26, 28).

27. Le train de roulement selon l'une quelconque des revendications précédentes de 2 à 26, **caractérisé en ce que** les logements (26, 28) correspondants prévus sur des flancs opposés (14, 16) du châssis principal (12) susmentionné sont réalisés par une cavité de logement respective allongée transversalement, des moyens étant prévus pour régler simultanément, dans la position rentrée à l'intérieur du logement respectif, la position verticale des extrémités libres (34b, 36b) des traverses (34, 36) s'étendant dans les logements opposés (26, 28) du châssis principal (12).

28. Le train de roulement selon la revendication 27, **caractérisé en ce que** lesdits moyens destinés à régler simultanément la position verticale des extrémités libres (34b, 36b) des traverses (34, 36) susmentionnées dans la position rentrée à l'intérieur des logements opposés (26, 28) du châssis principal (12) comprennent au moins une plaque centrale (90) destinée à supporter lesdites extrémités libres (34b, 36b) des traverses (34, 36) susmentionnées et des moyens destinés à déplacer bilatéralement à la verticale ladite plaque (90) et constitués par au moins une vis sans fin de réglage (92, 94) assujettissant la face de l'élément-plaque (90) en question qui est opposée à la face qui supporte les extrémités libres (34b, 36b) des traverses (34, 36).

29. Le train de roulement selon l'une ou l'autre des revendications précédentes 27 ou 28, **caractérisé en ce que** ladite plaque centrale (92) dans la cavité définissant les logements opposés (26, 28) du châssis principal est positionnée de manière à pousser les extrémités libres (34b, 36b) pour les assujettir contre une surface opposée dans le logement (26, 28).

30. Le train de roulement selon l'une quelconque des revendications précédentes, **caractérisé en ce que** des moyens sont prévus pour lubrifier lesdites première et deuxième surfaces inclinées (46, 48, 50, 52) destinées à bloquer la sortie de la traverse respective du logement (26, 28) correspondant.

31. Le train de roulement selon la revendication 30, **caractérisé en ce que** lesdits moyens de lubrification des première et deuxième surfaces inclinées (46, 48, 50, 52) susmentionnées comprennent une série de conduits de lubrification (96, 98) sur ladite première surface inclinée.

32. Le train de roulement selon la revendication 31, **caractérisé en ce que** lesdits conduits de lubrification comprennent au moins un canal primaire longitudinal (96) transversalement auquel s'étend une série de conduits secondaires (98).

33. Le train de roulement selon l'une quelconque des revendications précédentes de 14 à 33, **caractérisé en ce que** l'inclinaison préférée des faces inclinées (58, 60) susmentionnées destinées à arrêter les traverses par fermeture des sous-châssis du châssis principal est comprise entre 35° et 80°, de préférence égale à de 40° à 60°.
